# EUROPÄISCHE PATENTSCHRIFT

(11) **EP 1 521 994 B1**
(45) Veröffentlichungstag und Bekanntmachung des Hinweises auf die Patenterteilung: **16.11.2005**
(21) Anmeldenummer: 03763710.5
(22) Anmeldetag: 05.07.2003
(51) Int. Cl.: G02F 1/13, G02F 1/335, D06F 39/00

(54) **MODULFÖRMIGE HINTERLEUCHTETE FLÜSSIGKRISTALLANZEIGE ZUM EINSATZ HINTER DER BEDIENBLENDE EINES HAUSHALTSGROSSGERÄTES**
BACKLIT LIQUID CRYSTAL DISPLAY MODULE FOR USE BEHIND THE OPERATING PANEL OF A LARGE HOUSEHOLD APPLIANCE
SYSTEME D'AFFICHAGE A CRISTAUX LIQUIDES RETROECLAIRE EN FORME DE MODULE, SERVANT D'AFFICHAGE DERRIERE LE PANNEAU DE COMMANDE D'UN GRAND APPAREIL ELECTROMENAGER

(30) Priorität: 11.07.2002 DE 20210707 U
(43) Veröffentlichungstag der Anmeldung: 13.04.2005
(73) Patentinhaber: Diehl AKO Stiftung & Co. KG, 88239 Wangen (DE)
(72) Erfinder: MÖRSCH, Norbert, 88239 Wangen (DE)
(74) Vertreter: Diehl Patentabteilung
(86) Internationale Anmeldenummer: PCT/EP2003/007205
(87) Internationale Veröffentlichungsnummer: WO 2004/008233

(56) Entgegenhaltungen:
- EP-A- 1 039 216
- WO-A-99/53735
- TRUESON, PATRICK: "LED steht Kopf" DESIGN & ELEKTRONIK, Juni 2002 (2002-06), Seiten 25-27, XP009018050 in der Anmeldung erwähnt

## Beschreibung

Die Erfindung betrifft eine hinterleuchtete Flüssigkristallanzeige gemäß dem Oberbegriff des Anspruches 1.

Eine solche Leuchtanzeige ist insbesondere für Funktelefone aus der EP 1 039 216 A1 bekannt. Dort ruht eine kastenförmige Wanne auf der mit Leitungszügen kaschierten Seite einer Schaltungsplatine, die auf dieser kaschierten Seite außerdem mit einer mehrfarbigen Lichtquelle ausgestattet ist, welche seitlich in die Wanne einstrahlt. Auf dem Boden der Wanne ruht eine Lichtleiterplatte, in welche die Einstrahlung umgelenkt wird, um danach quer dazu durch eine Flüssigkristallzelle auszutreten; die auf der Lichtleiterplatte aufliegt. Auf dem freien Stimrand der Wanne liegt ein den Seitenrand der Flüssigkristallzelle überkragender Rahmen, der andererseits hinter einer Sichtöffnung gegen eine Gehäusevorderwand anliegt. Dadurch ist der Abstand zwischen dieser Einbauposition und der Schaltungsplatine von den Toleranzen zahlreicher Komponenten solch eines Modulaufbaus abhängig, was die Einbaugegebenheiten erschwert. Darüber hinaus ist es fertigungstechnisch von Nachteil, die Lichtquelle und die Wanne zur Aufnahme von Lichtleiterplatte samt Flüssigkristallzelle auf der mit Leiterbahnen kaschierten, also zu verlötenden Seite der Schaltungsplatine anzuordnen.

Eine Flüssigkristallanzeige ähnlichen Aufbaus ist in der DE 35 26 511 C1 skizziert. Auch hier ist eine Flüssigkristallzelle von einer Lichtleiterplatte hinterlegt, in die im wesentlichen parallel zu ihrer Hauptebene von einer Stirnseite her Licht eingestrahlt wird. Die dort aber im Längsschnitt keilförmige Lichtleiterplatte ist an ihrer von der Flüssigkristallzelle abgelegenen Rückseite stufig ausgebildet, um an den Stufenflanken Licht durch die Dicke der Platte hindurch in die Flüssigkristallanzeige hinein abzustrahlen, deren Betrachtungs- oder Sichtrichtung entgegen. Infolge der diskreten Stufengeometrie an der Rückseite der Lichtleiterplatte ist aber trotz deren Keilform mit einer hinreichend homogenen Durchstrahlung dertransmissiven Flüssigkristalle nicht zu rechnen, die zwischen den Lichtleiterstufen auftretenden Helligkeitssprünge erschweren das Ablesen der alphanumerischen Informationsdarstellung. Offengelassen ist in dieser Vorveröffentlichung, wie ein kompakter, auch in Hinblick auf unvermeidliche Bauteiletoleranzen fertigungsfreundlicher Modulaufbau für die Anzeige unter Einschluss der Ansteuerschaltung für ihre Flüssigkristallzelle gestaltet sein könnte.

Auch aus der WO 99/53735 ist eine Flüssigkristallanzeige mit einem eine Flüssigkristallzelle hinterleuchtenden Lichtleitelement bekannt. Dabei liegt das Lichtleitelement mit seiner eine Licht reflektierende Schicht aufweisenden Unterseite direkt auf einer Leiterplatte auf. Das Lichtleitelement ist wannenförmig ausgebildet und trägt bzw. umschließt die Flüssigkristallzelle, wobei ein haubenförmiger Rahmen das Lichtleitelement zusammen mit der Flüssigkristallzelle übergreift und auf der Leiterplatte hält. Die wannenformige Ausbildung des Lichtleitelements bewirkt, dass Licht nicht nur durch die Flüssigkristallzelle, sondern auch an ihr vorbei geleitet wird, was unerwünschtes Streulicht hervorruft. Außerdem ist der Aufbau gegen Fertigungstoleranzen sehr empfindlich, so dass hier erhöhter fertigungstechnischer Aufwand erforderlich wird.

Der Erfindung liegt nun die technische Problemstellung zugrunde, eine gattungsgemäße Flüssigkristallanzeige derart auszulegen, dass sie sich - ohne kostspielige Montageerfordernisse zu bedingen - durch kompakten und toleranzresistenten flachen Modulaufbau insbesondere zum Einsatz in der Bedienblende eines Haushaltsgroßgerätes eignet.

Gemäß der im Hauptanspruch angegebenen Merkmalskombination ist diese Aufgabe erfindungsgemäß dadurch gelöst, dass ein Sandwich-Aufbau aus den wie dort angegeben miteinander verrastbaren bzw. ineinander ruhenden vorgefertigten Einzelteilen realisiert wird.

Bezüglich Details, Alternativen und Weiterbildungen des erfindungsgemäß gruppierten Anzeigemoduls wird außer auf die weiteren Ansprüche auf nachstehende Beschreibung eines in der Zeichnung unter Beschränkung auf das Wesentliche aber angenähert maßstabsgerecht skizzierten bevorzugten Realisierungsbeispiels verwiesen, in der auch auf zusätzliche Vorteile der erfindungsgemäßen Lösung und ihrer Abwandlungen eingegangen wird. In der Zeichnung zeigt:
- Fig. 1: die Elemente des erfindungsgemäß ausgestalteten Sandwich-Aufbaus in ihrer Montagereihenfolge nach Art einer Explosionsdarstellung noch distanziert übereinander und
- Fig. 2: den gemäß Fig. 1 erstellten Flüssigkristallanzeige-Modul im vertikalen Längsschnitt.

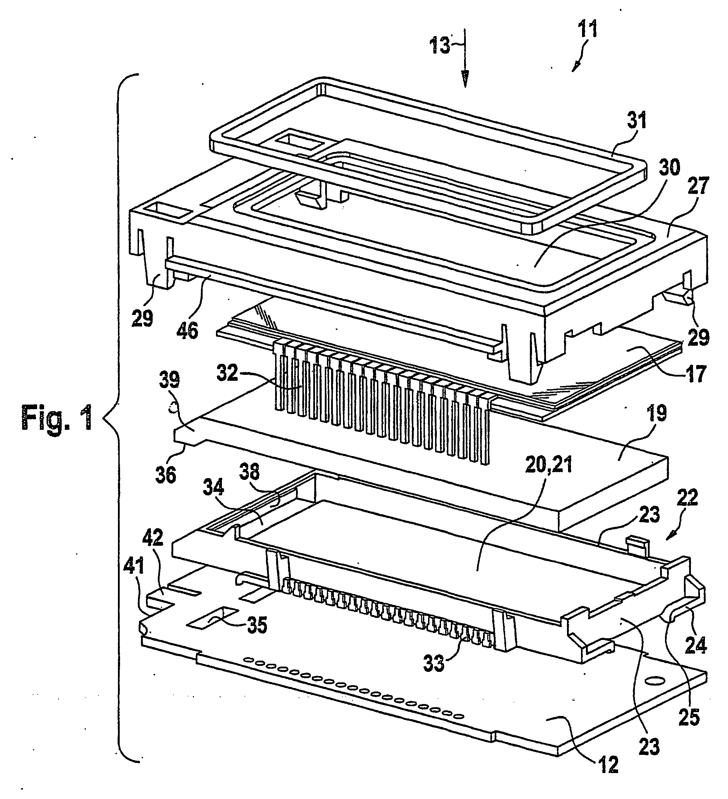

Basis für den aus Fig. 1 im Detail ersichtlichen Sandwichaufbau der erfindungsgemäß hinterleuchten Flüssigkristallanzeige als Anzeigemodul 11 ist eine Schaltungsplatine 12, die wenigstens auf ihrer der Sichtrichtung 13 abgewandten Rückseite 14 mit Leiterbahnen 15 zur Befestigung und Verschaltung von Bauelementen 16 für die Ansteuerung einer Flüssigkristallzelle 17 und von Lichtquellen 18 ausgestattet ist Die Lichtquellen 18 strahlen in eine Lichtleiterplatte 19 ein; aus der quer zu ihrer Hauptebene die sichtseitig davor gelegene Flüssigkristallzelle 17 der Sichtrichtung 13 entgegen durchstrahlt wird, um die momentane Symboldarstellung auf dem Anzeigemodul kontrastreich erkennen zu können. Für eine intensive aber diffuse Abstrahlung in die Zelle 17 hinein ist die der Zelle 17 benachbarte Auskoppelftäche der Platte 19 aufgerauht, vorzugsweise schon durch entsprechende Profilierung der Spritzgußform oder sonst erst nachträglich etwa durch Sandbestrahlung bzw. durch Belegung mit Rauhlack oder mit einer Rauhfolie. Die anderen Flächen der Lichtleiterplatte 19 sind möglichst glatt und vorzugsweise poliert, weil das beste Eigenschaften in Hinblick auf die gewünschte Totalreflexion für die Lichtleitung über die gesamte Fläche der Platte 19 erbringt.

Für eine möglichst gleichförmige helle Durchstrahlung der Flüssigkristallzelle 17 über ihre gesamte Anzeigefläche hinweg, also zur Erhöhung der Lichtausbeute, ist die Lichtleiterplatte 19 der aufgerauhten Abstrahlfläche gegenüber von einem Reflektor 20 hinterlegt. Allgemein für den Sandwichaufbau und speziell für die Halterung der Lichtleiterplatte 19 auf der Schaltungsplatine 12 ist der Reflektor 20 als Wannenboden 21 einer flachen Reflektorwanne 22 ausgebildet, zwischen deren umlaufenden Seitenwänden 23 die Lichtleiterplatte 19 eingefaßt ist. Diese Reflektorwanne 22 ist ein Spritzgußteil aus Material mit hohem Weißpigmentanteil und deshalb gut reflektierend. An deren Stirnwände sind außen quer zur Sichtrichtung 13 orientierte Federarme 24 mit Auflagefüßen 25 an deren freien Stirnenden angeformt, um die Auflage der Wanne 22 auf der Oberfläche 26 der Platine 12 elastisch abzustützen. Die Lagefixierung der Wanne 22 auf der Platine 12 erfolgt mittels unter dem Wannenboden 21 in Sichtrichtung 13 angeformt vorstehender Kreuzzapfen 45, die in Positionier- und Haltelöcher in der Schaltungsplatine 12 eingreifen.

Die Höhe der an der Reflektorwanne 22 umlaufenden Seitenwände 23 überragt geringfügig die Dicke der Lichtleiterplatte 19, so daß trotz unvermeidbarer Fertigungstoleranzen über die gesamte Fläche ein dünner Luftspalt zwischen der Lichtleiterplatte und der Flüssigkristallzelle 17 sichergestellt ist, wenn diese auf den freien Stirnrand der Wände 23 aufgelegt wird. Die seitliche Halterung der Zelle 17 erfolgt mittels von der Wanne 22 elastisch aufragender Stützhaken, die an zwei winklig zueinander verlaufende Wannenwände 23 angeformt sind und über die Seitenränder der Zelle 17 schnappen, wenn diese auf die Reflektorwanne 22 aufgedrückt wird. Damit werden die gegenüberliegenden Stirnseiten der Zelle 17 gegen Anschläge an der Wanne 22 angedrückt, um so die Zelle 17 kraftschlüssig zu fixieren.

Die axiale, also quer dazu in Sichtrichtung 13 orientierte Lagefixierung dieses Sandwichaufbaus erfolgt mittels eines breit haubenförmig umlaufenden Rahmens 27, unter dessen Sichtöffnung 30 eine Aufnahme 28 für den sichtseitigen Umfang der Flüssigkristallzelle 17 stufenförmig umläuft. Dieser Rahmen 27 wird über die schon auf die Schaltungsplatine 12 aufgesetzte Reflektorwanne 22 mit der darauf ruhenden Flüssigkristallzelle 17 gestülpt und mit an den Rahmen 27 angeformten, quer zur Sichtrichtung 13 ausweichenden Federnasen 29 in Positionierungs- und Halterungsdurchbrechungen in der Schaltungsplatine 12 verrastet. Dabei drücken die Federarme 24 den Sandwichaufbau aus Wanne 22 und darauf positionierter Flüssigkristallzelle 17 von unten, also der Sichtrichtung 13 entgegen, in die Aufnahme 28 hinein, so daß der Wannenboden 21 von der Platinenoberfläche geringfügig der Sichtrichtung 13 entgegen abgehoben wird. Dadurch ist die Modulhöhe eindeutig durch die Höhe des Rahmens 27 und dessen Verankerung in der Schaltungsplatine 12 bestimmt.

Der Rahmen 27 ist sichtseitig mit einer die zentrale Sichtöffnung 30 umgebend vorragenden weichelastischen Dichtung 31 ausgestattet, die etwa aus einer Moosgummimatte ausgestanzt ist. Damit wird dieser Sandwich-Aufbau gegen die Rückseite der Umgebung eines Sichtfensters in der Bedienblende (in der Zeichnung nicht berücksichtigt) eines Haushaltsgroßgerätes wie einer Waschmaschine, eines Trockners oder einer Spülmaschine staubdicht und vibrationssicher angedrückt, wenn der Anzeigemodul 11 beispielsweise mit seitlich an den Rahmen 27 vorstehend angeformten Haltelaschen zwischen rückwärtig an die Bedienblende angeformte Halteschienen eingesteckt wird. Die Dichtung 31 kann wie skizziert als separat erstelltes Teil in eine sichtseitig umlaufende Nut in den Rahmen 27 eingeklebt sein. Produktionstechnisch einfacher ist es jedoch, für diese Abdichtung gegen rückwärtige Verschmutzung des Sichtfensters in der Bedienblende kein unter großem Verschnitt separat beizustellendes, mechanisch nicht stabiles Teil extra einkleben zu müssen, sondern entsprechend wirkende Dichtlippen direkt vom Kunststoffrahmen 27 in der Umgebung dessen Sichtöffnung 30 vorstehend an diesen anzuformen. Allerdings verlangt die Dichtfunktion ein viel weicheres Material, als der die Modulhöhe bestimmende Hauben-Rahmen 27 selbst, weshalb der Rahmen 27 und die Dichtung 31 nicht homogen gespritzt werden können. Statt dessen kann vorgesehen sein, den schon gespritzten Rahmen 27 als Einlegeteil in ein anderes Werkzeug zu überführen und ihm dort die lippenformige biegeweiche Dichtung 31 anzuspritzen. Oder alternativ dazu wird als Weiterbildung im Rahmen vorliegender Erfindung vorgesehen, die als solche bekannte 2K-Spritztechnik zu realisieren, wonach das speziell weichere Material für die Elastomer-Dichtlippe in einer benachbarten Werkzeugkavität mittels eines zweiten Spritzaggregates an das Spritzgußmaterial des Rahmens 27 anzuspritzen. Die gegenüber der getrennten Fertigung höheren Werkzeugkosten rechtfertigen sich nicht erst in der Massenproduktion, zumal das technologisch und fertigungstechnisch störanfällige Verkleben der unstabilen Moosgummi-Dichtung 31 entfällt.

Die elektrische Ansteuerung der Darstellsegmente in der Flüssigkristallzelle 17 von den Leiterbahnen 15 an der Rückseite 14 der Schaltungsplatine 12 her erfolgt mittels an einer Seite der Flüssigkeitszelle 17 verankerter Anschlußstifte 32. Diese Anschlußstifte 32 erfahren bei der Sandwichmontage eine seitliche Führung in einer wellenförmigen Profilierung 33 auf der Außenseite der zugeordneten Seitenwand 23 der Reflektorwanne 22, wie in Fig. 1 direkt oberhalb der Schaltungsplatine 12 ersichtlich. Solch eine Führung erleichtert die Bestückung, weil die Zelle 17 mit ihren Stiften 32 nun zunächst seitlich gegen die Profilierung 33 angelegt und dann bis zum seitlichen Überschnappen der Haltelaschen auf die Reflektorwanne 22 abgesenkt werden kann. Dabei greifen die Stifte 32, quer zur Hauptebene der Flüssigkeitszelle 17 und somit parallel zur Sichtrichtung 13 seitlich an der Reflektorwanne 22 vorbei, in Durchgangslöcher in der Schaltungsplatine 12 ein, um dort rückseitig im Lötprozeß mit den Leiterbahnen 15 elektrisch und mechanisch verbunden zu werden.

Üblicherweise strahlen die Lichtquellen 18 zum Durchstrahlen der Zelle 17 in einen Stirnrand einer ebenen Lichtleiterplatte 19 etwa parallel zu deren Hauptebene hinein und geben quer dazu über die Auskoppelfläche Streulicht ab, wie eingangs schon erläutert. Die vorliegende Anordnung der Lichtleiterplatte 19 auf einem Reflektor 20 innerhalb der ebenfalls reflektierenden Seitenwände 23 der Reflektorwanne 22 erhöht die Lichtausbeute beim rückwärtigen Durchstrahlen der Flüssigkristallzelle 17. Für das seitliche Einstrahlen in die Platte 19 ist es allerdings erforderlich, die Lichtquellen neben der Lichtleiterplatte 19 auf der Vorderseite der Schaltungsplatine 12 und somit den übrigen Bauelementen 16 gegenüber zu montieren. Das vergrößert die Modul-Grundfläche, erhöht die Kosten wegen einer durchzukontaktierenden Schaltungsplatine 12 und stellt auch einen erheblichen fertigungstechnischen Mehraufwand gegenüber einer SMD-Montage auf einer nur einseitig kaschierten Schaltungsplatine 12 dar. Um diese bevorzugte Bestückungstechnik auch im Falle vorliegenden Anzeigemoduls 11 realisieren zu können, läuft die Lichtleiterplatte 19 an einer ihrer schmalen Stirnseiten erfindungsgemäß in einen letztlich parallel zur Sichtrichtung 13 abgewinkelten Schenkel 36 aus. Der ragt mit seinem freien Stirnende durch einen rechteckigen Durchbruch 34 im Wannenboden 31 hindurch auf eine genau darunter gelegene Durchbrechung 35 in der Schaltungsplatine 12 zu, gegebenenfalls auch noch in eine grabenförmige Durchbrechung 35 hinein. Darunter, in oder hinter der Durchbrechung 35, ist die Lichtquelle 18 unter der Rückseite 14 der Schaltungsplatine 12 gehaltert, indem sie mit ihren Anschlußdrähten 37 quer zur Längsrichtung der Durchbrechung 35 auf die Leiterbahnen 15 aufgelötet ist. So können mehrere Lichtquellen 18 längs der Durchbrechung 35 (oder gemäß Fig.1 links unten längs einer einander benachbarten Folge solcher Durchbrechungen 35-35) nebeneinander montiert sein, um eine besonders intensive und gleichförmige Lichtdurchflutung in der Platte 19 zu erzielen.

Bei der hinter der Schaltungsplatine 12 montierten Lichtquelle 18 handelt es sich vorzugsweise um eine sog. Reverse-Mount-LED, wie sie etwa aus der Zeitschrift DESIGN & ELEKTRONIK, Heft 06/2002. Seite 25 als solche bekannt ist- dort zur direkt gegen die Sichtrichtung der Anzeige gerichteten Einstrahlung durch einen Lichtleiter in die Flüssigkristallzelle, die dadurch aber über ihrer Sichtfläche mit sehr unterschiedlichen Intensitäten durchstrahlt wird.

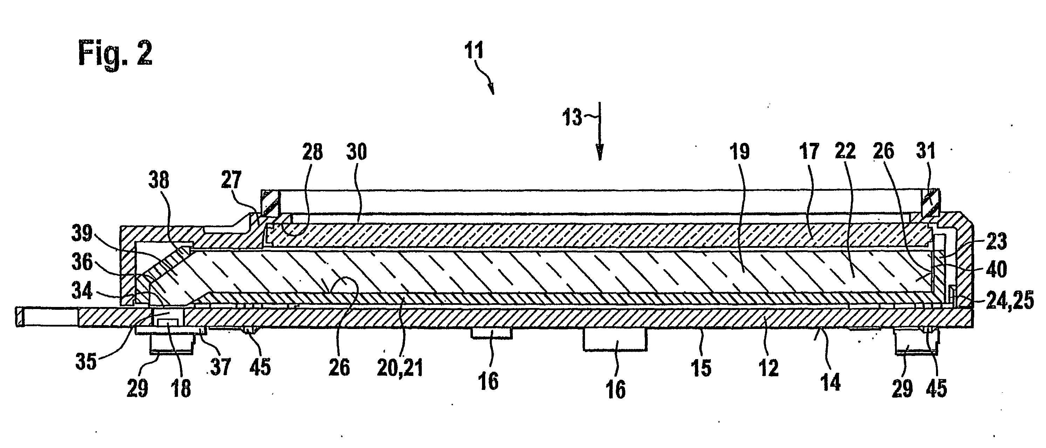

Um Lichtverluste im bogenförmigen oder entsprechend mehrfach abgewinkelt verlaufenden Übergangsbereich 39 vom Schenkel 34 in die großflächige, parallel zur Flüssigkristallzelle 17 und damit quer zur Sichtrichtung 13 sich erstreckende Lichtleiterplatte 19 hinein möglichst zu vermeiden, weist die Reflektorwanne 22 neben dem wandparallelen Durchbruch 34 im Wannenboden 21 eine dem abgeknickten Übergangsbereich 39 zum Schenkel 36 hin entsprechend geneigt verlaufende Reflektorwand 38 auf. Damit die Lichtleiterplatte 19 mit ihrem zum Schenkel 36 abknickenden Randbereich 39 im Interesse guter Reflexionsgegebenheiten möglichst spaltfrei flächig gegen die Reflektorwand 38 anliegt, ist zwischen der gegenüberliegenden schmalen Seitenwand 23 der Reflektorwanne 22 und der Lichtleiterplatte 19 ein quer zur Sichtrichtung 13 wirkendes Federelement 40 vorgesehen. Dabei kann es sich um ein eingelegtes Gummistück, montagetechnisch einfacher jedoch um einen innen an die Stirnwand 23 angespritzten kleinen Federarm handeln, der unter Vorspannung quer zur Sichtrichtung 13 gegen den benachbarten Stimrand der Lichtleiterplatte 19 elastisch anliegt. Der Bereich der Auskoppelfläche auf der Lichtleiterplatte 19, der nicht von der Flüssigkristallzelle 17 belegt ist, wird zur Vermeidung von Abstrahlverlusten vom rückwärtig entsprechend abgestuft profilierten Rahmen 27 bedeckt, wie in Fig.2 neben der geneigten Reflektorwand38 berücksichtigt. Dabei kann jedoch die rückseitige Abstufung des Rahmens 27 sich entgegen der Beispielsdarstellung auch auf den Bereich und die Funktion der geneigten Reflektorwand 38 erstrecken.

Problematisch hinsichtlich der hinter der Bedienblende konstruktiv vorgegebenen Einbauabmessungen für den Anzeigemodul 11 ist im Stande der Technik regelmäßig dessen schwankende Bauhöhe zwischen der Rückseite 14 der Schaltungsplatine 12 und der sichtseitigen Front des Rahmens 27 (ohne Berücksichtigung der darüber auflragenden weichen Dichtung 31) aufgrund der Dickentoleranzen der einzelnen Komponenten eines Sandwichaufbaus der beschriebenen Art. Deshalb ist vorgesehen, für die mechanische Halterung des Moduls 11 die schon erwähnten vorragenden Rastklammern oder Steckrippen 46 in definierter Höhe unter der Sichtöffnung 30 direkt seitlich an den Rahmen 27 anzuformen, aber den elektrischen Anschluß nicht ebenfalls starr vorzugeben, sondern über ein flexibles Kabel mit Vielfachsteckkeinrichtung zu am vorragenden Leiterplattenrand 41 aufkaschierten Kontakten 42 auszuführen.

Jedenfalls erzielt man erfindungsgemäß beim Modul 11 einer hinterleuchteten Flüssigkristallanzeige, wie sie insbesondere in der Bedienblende eines Haushaltsgroßgerätes vorkommt, einen herstellungstechnisch einfachen, räumlich kompakten und hinsichtlich der Einbaumaße eng tolerierten Aufbau bei guter Ausleuchtung der transmissiven Flüssigkristallzelle 17, wenn dafür die Lichtleiterplatte 19 in einer Reflektorwanne 22 und die Flüssigkristallzelle 17 unter geringem Abstand zur Auskoppelfläche der Platte 19 auf den Seitenwänden 23 der Wanne 22 angeordnet wird.

Unter bewußter Abkehr von dem gängigen, gegenüber der Schaltungsplatine spielfreien Aufbau bestimmt nun ein jene Anordnung haubenförmig übergreifender Rahmen 27 die Modulhöhe bei seiner formschlüssigen Verankerung in der Schaltungsplatine 12, auf welcher die Reflektorwanne 22 nun federnd aufliegt. Die Federn 24 am Reflektor 21 drücken die Schaltungsplatine (Leiterplatte) 12 gegen die Verrastung der Federarme 29 am Rahmen 27 und gleichen dadurch die einzelnen Dickentoleranzen im Sandwichaufbau aus.

Um die Lötstellen der Stifte 32 für die elektrische Ansteuerung der Flüssigkristallzelle 17 beim Einbau des Moduls 12 zwischen Blende und Leiterplatte 12 sowie infolge Vibrationen im Maschinenbetrieb nicht mechanisch zu beanspruchen, erfolgt die Modulmontage nicht mittels der Leiterplatte (Schaltungsplatine) 12, sondern mittels Steckrippen oder Rasthaken, die außen an den Rahmen 27 angeformt sind.

Und die Einstrahlung in die Lichtleiterplatte 19 erfolgt der Sichtrichtung 13 entgegen von der SMD-bestückten Rückseite 14 der Schaltungsplatine 12 her durch wenigstens eine Durchbrechung 35 in der Schaltungsplatine 12 und durch einen darüber gelegenen Durchbruch 34 im Reflektor 21 hindurch über einen gegenüber der Hauptebene der Lichtleiterplatte 19 in Sichtrichtung 13 abgewinkelt nach unten verlaufenden Schenkel 36.

## Patentansprüche

1. Hinterleuchtete Flüssigkristallanzeige mit einer quer zur Sichtrichtung (13) auf die Anzeige lichtdurchfluteten Lichtleiterplatte (19) unter einer ihrerseits unter einem Rahmen (27) gelegenen, elektrisch und mechanisch an eine Schaltungsplatine (12) angeschlossenen Flüssigkristallzell (17) und mit einer die Lichtleiterplatte (19) in sich aufnehmenden, elastisch abgestützt auf der Schaltungsplatine (12) aufliegenden, Reflektorwanne (22), die in geringem Abstand über der Lichtleiterplatte (19) die Flüssigkristallzelle (17) trägt, wobei eine elektrisch und mechanisch an Leiterbahnen (14) der Schaltungsplatine (12) angeschlossene Lichtquelle (18) seitlich in die Lichtleiterplatte (19) einstrahlt,
**dadurch gekennzeichnet,**
**dass** die Flüssigkristallanzeige als Modul (11), insbesondere zum Einsatz als Anzeigemodul (11) hinter der Bedienblende eines Haushaltsgerates ausgebildet ist und dass die Reflektorwanne (22) von dem die Bauhöhe des Moduls (11) bestimmenden, haubenförmigen Rahmen (27) übergriffen ist, und dass die Lichtleiterplatte (19) mit einem abgewinkelt verlaufenden Schenkel (36) in einen schlitzförmigen Durchbruch (34) im Wannenboden (21) eingreift, unter dem wenigstens eine Durchbrechung (35) in der Schaltungsplatine (12) gelegen ist, in der oder unter der die in den Schenkel (36) einstrahlende Lichtquelle (18) angeordnet ist, die an Leiterbahnen (14) auf der vom Rahmen (27) abgewandten Rückseite (14) der Schaltungs platine (12) angeschlossen ist, an welcher der Rahmen (27) mit Fedemasen (29) der elastischen Abstützung der Reflektorwanne (22) entgegen starr verrastet ist.

2. Flüssigkristallanzeige nach Anspruch 1,
**dadurch gekennzeichnet,**
**dass** der Bereich des abgewinkelten Verlaufes der Lichtleiterplatte (19) zum Schenkel (36) mit einer entsprechend geneigt verlaufenden Reflektorwand (38) belegt ist.

3. Flüssigkristallanzeige nach dem vorangehenden Anspruch,
**dadurch gekennzeichnet,**
**dass** die Reflektorwand (38) Teil der Reflektorwanne (22) oder des Rahmens (27) ist.

4. Flüssigkristallanzeige nach dem vorangehenden Anspruch,
**dadurch gekennzeichnet,**
**dass** die Lichtleiterplatte (19) in Richtung ihrer Hauptebene elastisch gegen die Reflektorwand (38) angedrückt ist.

5. Flüssigkristallanzeige nach einem der vorangehenden Ansprüche,
**dadurch gekennzeichnet,**
**dass** eine im Rahmen (27) über der Flüssigkristallzelle (17) gelegene Sichtöffnung (30) von einer weichelastischen Dichtung (31) auftragend umgeben ist.

6. Flüssigkristallanzeige nach dem vorangehenden Anspruch,
**dadurch gekennzeichnet,**
**dass** die Dichtung (31) einstückig mit dem Rahmen (27) aber aus jenem gegenüber aus weicherem Kunststoffmaterial gespritzt ist.

7. Flüssigkristallanzeige nach einem der vorangehenden Ansprüche,
**dadurch gekennzeichnet,**
**dass** die Lichtquelle (18) wenigstens eine auf der Rückseite der einseitig kaschierten Schaltungsplatine (12) in Oberflächenmontage angeschlossene lichtemittierende Diode ist.

8. Flüssigkristallanzeige nach einem der vorangehenden Ansprüche,
**dadurch gekennzeichnet,**
**dass** die Flüssigkristallzelle (17) auf den Seitenwänden (23) der Reflektorwanne (22) gehaltert ist, welche die Stärke der Lichtleiterplatte (19) geringfügig überragen.

9. Flüssigkristallanzeige nach einem der vorangehenden Ansprüche,
**dadurch gekennzeichnet,**
**dass** die Reflektorwanne (22) mit in Sichtrichtung (13) auslenkenden Federarmen (24) zur elastischen Auflage auf der Schaltungsplatine (12) ausgestattet ist.

10. Flüssigkristallanzeige nach einem der vorangehenden Ansprüche,
**dadurch gekennzeichnet,**
**dass** über der Schaltungsplatine (12) Profilierungen (33) für die Längsführung von Anschlußstiften (32) an der Flüssigkristallzelle (17) vorgesehen sind.

## Claims

1. Backlit liquid crystal display having a printed circuit board (19), flooded with light transverse to the direction of view (13) onto the display, under a liquid crystal cell (17) connected electrically and mechanically to a circuit board (12) and for its part lying under a frame (27), and having a reflector trough (22), which accommodates the printed circuit board (19), rests on the circuit board (12) in an elastically supported fashion, and supports the liquid crystal cell (17) at a short distance above the printed circuit board (19), a light source (18) connected electrically and mechanically to conductor tracks (14) of the circuit board (12) radiating laterally into the printed circuit board (19), **characterized in that** the liquid crystal display is designed as a module (11), particularly for use as a display module (11) behind the operating panel of a household appliance, and **in that** the reflector trough (22) is overlapped by the hood-shaped frame (27) which determines the overall height of the module (11), and **in that** the printed circuit board (19) engages with a limb (36), running off at an angle, in a slit-shaped aperture (34) in the trough base (21) under which there lies at least one opening (35) in the circuit board (12) in which, or under which, there is arranged the light source (18) which radiates into the limb (36) and is connected to conductor tracks (14) on the rear side (14), averted from the frame (27), of the circuit board (12) on which the frame (27) is rigidly latched with the aid of resilient lugs (29) against the elastic support of the reflector trough (22).

2. Liquid crystal display according to Claim 1, **characterized in that** the region of the angular course of the printed circuit board (19) is occupied to the limb (36) by a reflector wall (38) running in an appropriately inclined fashion.

3. Liquid crystal display according to the preceding claim, **characterized in that** the reflector wall (38) is part of the reflector trough (22) or of the frame (27).

4. Liquid crystal display according to the preceding claim, **characterized in that** the printed circuit board (19) is pressed elastically in the direction of its main plane against the reflector wall (38).

5. Liquid crystal display according to one of the preceding claims, **characterized in that** a viewing opening (30) lying in the frame (27) above the liquid crystal cell (17) is surrounded supportively by a soft elastic seal (31).

6. Liquid crystal display according to the preceding claim, **characterized in that** the seal (31) is injected in one piece with the frame (27) but from a plastic material which is softer by comparison therewith.

7. Liquid crystal display according to one of the preceding claims, **characterized in that** the light source (18) is at least one light-emitting diode which is connected by surface mounting on the rear side of the single-sidedly coated circuit board (12).

8. Liquid crystal display according to one of the preceding claims, **characterized in that** the liquid crystal cell (17) is held on the side walls (23) of the reflector trough (22) which slightly exceed the thickness of the printed circuit board (19).

9. Liquid crystal display according to one of the preceding claims, **characterized in that** the reflector trough (22) is fitted with resilient arms (24), deflecting in the direction of view (13) for the purpose of bearing elastically against the circuit board (12).

10. Liquid crystal display according to one of the preceding claims, **characterized in that** profiled parts (33) for longitudinally guiding connecting pins (32) on the liquid crystal cell (17) are provided above the circuit board (12).

## Revendications

1. Système d'affichage à cristaux liquides rétroéclairé avec une plaque de guidage de lumière (19) traversée de lumière transversalement à la direction d'observation (13) du système d'affichage, sous une cellule à cristaux liquides (17) montée elle-même sous un cadre (27), connectée électriquement et mécaniquement à une plaquette de circuits imprimés (12), et avec un bac réfléchissant (22) reposant de manière élastique sur la plaquette de circuits imprimés (12), recevant la plaque de guidage de lumière (19), qui supporte à une faible distance au-dessus de la plaque de guidage de lumière (19) la cellule à cristaux liquides (17), une source lumineuse (18) connectée électriquement et mécaniquement à des pistes conductives (14) de la plaquette de circuits imprimés (12) irradiant sur le côté de la plaque de guidage de lumière (19),
**caractérisé en ce que**
le système d'affichage à cristaux liquides est conformé comme un module (11), en particulier pour servir de module d'affichage (11) derrière le panneau de commande d'un appareil électroménager, et **en ce que** le bac réfléchissant (22) reposant de manière élastique sur la plaquette de circuits imprimés (12) est recouvert par le cadre (27) en forme de capot déterminant l'encombrement en hauteur du module (11), et **en ce que** la plaque de guidage de lumière (19) pénètre avec une aile coudée (36) dans un évidement en forme de fente (34) dans le fond (21) du bac, sous lequel se trouve au moins un évidement (35) dans la plaquette de circuits imprimés (12) dans lequel ou sous lequel est agencée la source lumineuse (18) irradiant dans l'aile (36) qui est connectée aux bandes conductives (14) sur la face arrière (14) de la plaquette de circuits imprimés (12) opposée au cadre (27), sur laquelle le cadre (27) est enclenché de manière rigide avec des tenons élastique (29) en opposition au support élastique du bac réfléchissant (22).

2. Système d'affichage à cristaux liquides selon la revendication 1,
**caractérisé en ce que**
la région du coude de la plaque de guidage de lumière (19) menant à l'aile (36) est occupée par une paroi réfléchissante (38) inclinée de manière appropriée.

3. Système d'affichage à cristaux liquides selon la revendication précédente,
**caractérisé en ce que**
la paroi réfléchissante (38) fait partie du bac réfléchissant (22) ou du cadre (27).

4. Système d'affichage à cristaux liquides selon la revendication précédente,
**caractérisé en ce que**
la plaque de guidage de lumière (19) est appliquée dans la direction de son plan principal de manière élastique contre la paroi réfléchissante (38).

5. Système d'affichage à cristaux liquides selon l'une quelconque des revendications précédentes,
**caractérisé en ce que**
une ouverture d'observation (30) ménagée dans le cadre (27) au-dessus de la cellule à cristaux liquides (17) est entourée par un joint élastique tendre (31).

6. Système d'affichage à cristaux liquides selon la revendication précédente,
**caractérisé en ce que**
le joint (31) est injecté d'une pièce avec le cadre (27) mais dans une matière plastique plus tendre que celui-ci.

7. Système d'affichage à cristaux liquides selon l'une quelconque des revendications précédentes,
**caractérisé en ce que**
la source lumineuse (18) est constituée d'au moins une diode électroluminescente connectée en montage en surface à la face arrière de la plaquette de circuits imprimés (12) habillée d'un côté.

8. Système d'affichage à cristaux liquides selon l'une quelconque des revendications précédentes,
**caractérisé en ce que**
la cellule à cristaux liquides (17) est retenue sur les parois latérales (23) du bac réfléchissant (22) qui dépassent légèrement l'épaisseur de la plaque de guidage de lumière (19).

9. Système d'affichage à cristaux liquides selon l'une quelconque des revendications précédentes,
**caractérisé en ce que**
le bac réfléchissant (22) est doté de bras élastiques (24) mobiles dans la direction d'observation (13) pour reposer de manière élastique sur la plaquette de circuits imprimés (12).

10. Système d'affichage à cristaux liquides selon l'une quelconque des revendications précédentes,
**caractérisé en ce que**
au-dessus de la plaquette de circuits imprimés (12) sont prévus des profilages (33) pour le guidage longitudinal de broches de raccordement (32) sur la cellule à cristaux liquides (17).
